Europäisches Patentamt

**European Patent Office**

Office européen des brevets

(11) Veröffentlichungsnummer: **0 135 737**
A2

(12) **EUROPÄISCHE PATENTANMELDUNG**

(21) Anmeldenummer: **84109220.8**

(22) Anmeldetag: **03.08.84**

(51) Int. Cl.⁴: **A 01 G 3/02**, B 26 B 13/16

(30) Priorität: 09.09.83 DE 3332576
19.07.84 DE 3426577

(43) Veröffentlichungstag der Anmeldung: **03.04.85**
**Patentblatt 85/14**

(84) Benannte Vertragsstaaten: **AT BE CH DE FR GB IT LI LU NL SE**

(71) Anmelder: **GARDENA Kress + Kastner GmbH,
Lichternseestrasse 40 Postfach 27 47, D-7900 Ulm
(Donau) (DE)**

(72) Erfinder: **Reichart, Vincent, Borsigstrasse 10,
D-7913 Senden (DE)**
Erfinder: **Lindermeir, Wolfgang, Bachstrasse 5,
D-7934 Untermarchtal (DE)**
Erfinder: **Stephany, Christian, Biberacher Strasse 76,
D-7900 Ulm (DE)**
Erfinder: **Katzer, Johann, Nebelhornweg 9,
D-7910 Neu-Ulm (DE)**

(74) Vertreter: **Patentanwälte Ruff und Beier,
Neckarstrasse 50, D-7000 Stuttgart 1 (DE)**

(54) Schere, insbesondere Gartenschere.

(57) Eine Schere, insbesondere eine Gartenschere, enthält
zum Öffnen eine Feder. Als Verriegelungselement für die
Schere ist ein Verriegelungsschieber (27) vorgesehen, der
um einen begrenzten Betrag verschiebbar ist, wobei er in
seiner Extremstellung mit Hilfe eines Sperrstiftes (31) eine
Verriegelung der Schere in geschlossener Stellung durchführt. Wird der Schieber aus der einen Extremstellung verschoben, so gelangt er in seine zweite Extremstellung, in
der die Schere geöffnet ist. In beiden Endstellungen ist der
Schieber (27) mit Hilfe einer Feder (25) verrastbar. Die
Feder kann die zum Öffnen der Schere verwendete Schraubenfeder (25) sein.

Anmelderin:          GARDENA Kress + Kastner GmbH
Lichternseestraße 40
7900 Ulm/Donau

## Schere, insbesondere Gartenschere

Die Erfindung betrifft eine Schere, insbesondere eine Gartenschere, mit zwei mit je einem Griff versehenen, miteinander
mit Hilfe eines Gelenkes verbundenen Scherenteilen, mit einem
Verriegelungselement zum Verriegeln der Schere in geschlossener
Stellung sowie ggf. mit einer Feder zum Öffnen der Schere.

Bei bekannten Scheren dieser Art (DE-GBM 16 57 112) ist das
Verriegelungselement am Ende eines Griffes angeordnet und
kann das Ende des anderen Griffes umklammern. Die zum Auseinanderspreizen der Schere verwendete Feder ist eine spiralig
gewundene Feder. Diese Federn besitzen aufgrund des Reibens
ihrer einzelnen Lagen aneinander eine große Reibung, so daß
zum Betätigen der Schere viel Kraft erforderlich ist, da
die Feder mindestens so stark ausgebildet sein muß, daß sie
die Schere mit Sicherheit noch öffnet. Das am Ende der Griffe angeordnete Verriegelungselement läßt sich nur schwer
bedienen, man muß hierzu jeweils die zweite Hand zuhilfe
nehmen.

Es ist ebenfalls bei Scheren schon bekannt (DE-PS 26 23 550),
zur Verriegelung ein Verriegelungselement im Bereich des Schneidenendes eines Handgriffs anzuordnen, wobei das Verriegelungselement mit einem Teil der Schneide zusammenwirkt.

Der Erfindung liegt die Aufgabe zugrunde, eine Schere, insbesondere eine Gartenschere, im Hinblick auf eine leichtere Bedienbarkeit und unkompliziertere und billigere Herstellung weiter zu verbessern.

Zur Lösung dieser Aufgabe ist erfindungsgemäß vorgesehen, daß das Verriegelungselement ein Schieber ist, der im Bereich des dem Gelenk zugewandten Endes eines Griffes angeordnet, etwa in Längsrichtung des Griffes verschiebbar und unter Federwirkung in einer Verriegelungsstellung und einer Freigabestellung rastend festlegbar ist.

Durch diese Ausgestaltung wird es möglich, die Schere mit einer Hand zu bedienen, wobei der Schieber beispielsweise mit dem Daumen betätigt werden kann. Darüber hinaus ist sichergestellt, daß das Verschlußelement, nämlich der Schieber, nicht von allein in die Verriegelungsstellung gelangen kann.

Besonders günstig ist es, wenn der Verriegelungsschieber einen Sperrstift aufweist, der in Verriegelungsstellung an einer Flanke eines Schlitzes, einer Einkerbung oder einer Ausnehmung des ihm gegenüber verschwenkbaren Scherenteils angreift. Dieser Sperrstift besteht vorzugsweise aus Metall. Dadurch wirkt das Verriegelungselement mit der ebenfalls aus Metall bestehenden Schneide der Schere zusammen, so daß auch bei möglicherweise aus Kunststoff oder Holz bestehenden Handgriffen dennoch eine sichere Verriegelung der Schere in geschlossenem Zustand gegeben ist. Die Flanke, an der der Sperrstift angreift, kann Teil eines einseitig offenen Schlitzes sein. Es reicht aus, daß der Stift an der Flanke angreift, da eine Weiterbewegung der Schere in Schließstellung in der Regel sowieso unmöglich ist.

Eine nochmalige Verbesserung der Schere im Hinblick auf eine
gute Verriegelung wird dann erreicht, wenn der Sperrstift
des Verriegelungsschiebers in einem Schlitz des anderen Scherenteils geführt ist, d.h. desjenigen Scherenteils, an dem
der Verriegelungsschieber angeordnet ist. Damit wird erreicht,
daß die eigentliche Verriegelung direkt zwischen den beiden
aus Metall bestehenden Scherenteilen und dem Sperrstift bewirkt wird, so daß der Verriegelungsschieber nur zur Bewegung
des Sperrstiftes herangezogen wird, selbst jedoch an der
Verriegelung nicht teilnimmt. Dies ist eine außerordentlich
günstige und haltbare Art der Verriegelung, so daß das Verriegelungselement eine lange Lebensdauer erreichen kann.

Die Erfindung schlägt ebenfalls vor, daß der Verriegelungsschieber an mindestens einem Scherenteil im Bereich des Gelenkes angreifen kann. Dadurch läßt sich die Verriegelungseinrichtung besonders platzsparend unterbringen. Zur leichteren
Bedienbarkeit und zur guten Verriegelung der Schere dient
das weitere Merkmal, wonach mindestens ein Schlitz bzw. eine
Einkerbung im Bereich des Gelenks der Schere angeordnet ist.

Bei den bekannten Scheren konnten keine Schraubenfedern zum
Öffnen der Schere verwendet werden, da bei der auftretenden
Schwenkbewegung die auf Druck beanspruchten Schraubenfedern
unkontrolliert zur Seite ausknickten. Die Erfindung schlägt
hier vor, daß vorzugsweise die als Schraubenfeder ausgebildete
Feder zum Öffnen der Schere auch zum Festlegen des Schiebers
ausgebildet ist, diesen durchsetzt und sowohl in der Verriegelungsstellung als auch in der Freigabestellung des Schiebers
aus ihrer Normalstellung ausgeknickt ist. Damit wird es zum
ersten mal möglich, aufgrund des Durchgreifens der Schraubenfeder
durch den Verriegelungsschieber eine Schraubenfeder zu verwenden. Das auftretende Ausknicken wird durch die Bewegung des Verriegelungsschiebers begrenzt, wobei gleichzeitig das
Ausknicken der Feder eine Rastung des Verriegelungsschiebers
bewirkt. Darüber hinaus ist die Schraubenfeder durch den
Verriegelungsschieber mechanisch geschützt, und eine Gefahr
der Verschmutzung besteht nicht mehr.

Es kann erfindungsgemäß vorgesehen sein, daß der Verriegelungsschieber eine von dem einen Scherenteil zu dem anderen
Scherenteil verlaufende Öffnung zur Aufnahme der Feder aufweist. Die Feder, die üblicherweise auf der Innenseite zwischen den beiden Handgriffen angeordnet ist, verläuft damit
vollständig durch den Verriegelungsschieber, so daß sie auch
mechanisch gegen Beschädigungen geschützt ist. In geschlossenem Zustand kann die Feder vollständig innerhalb des Verriegelungsschiebers liegen. Damit ist auch die Gefahr von Verletzungen beseitigt.

In weiterer Ausgestaltung kann vorgesehen sein, daß die Feder
zum Rasten des Verriegelungsschiebers durch ein Zungenfederelement gebildet ist, das zwei Raststellungen aufweist. Dabei
kann beispielsweise eine Zungenfeder zwei Vertiefungen aufweisen, von denen jede Vertiefung eine Raststellung bewirkt.
Aufgrund der Verwendung eines Zungenfederelementes kann dafür gesorgt werden, daß die Feder nur während der Bewegung
belastet wird, und in den stabilen Endzuständen des Verriegelungsschiebers nur eine praktisch verschwindende Belastung
aufweist. Es ist ebenfalls möglich, eine Zunge mit nur einer
Vertiefung an zwei unterschiedlichen Teilen angreifen zu
lassen, wobei es natürlich auch möglich ist, ein Federelement
mit zwei Zungenfedern zu verwenden.

Besonders günstig ist es, wenn das Zungenfederelement zwei
gegenüberliegende Federzungen aufweist, von denen jede eine
Vertiefung zur Bildung der einen Raststellung und eine Schrägfläche zur Bildung der zweiten Raststellung aufweist. Die
beiden Federzungen können U-förmig angeordnet und einstückig
ausgebildet sein. Dadurch läßt sich das Federelement besonders einfach herstellen, es wirkt symmetrisch mit einem Verrastungsteil zusammen, so daß besonders günstige Wirkungen
erzielt werden.

Die Erfindung schlägt vor, daß das Zungenfederelement an
dem Verriegelungsschieber angeordnet sein und an einen Vorsprung eines Schneidenteils angreifen kann. In diesem Fall
ließe sich das Zungenfederelement einstückig mit dem Verriegelungsschieber ausbilden. Das Zungenfederelement kann dabei
genauso wie der Verriegelungsschieber aus Kunststoff bestehen, es ist jedoch auch möglich, es aus Metall herzustellen.
Der Vorsprung, an dem es angreift, kann mit Vorzug ein Stift
sein.

In weiterer Ausbildung kann vorgesehen sein, daß das Zungenfederelement an einem Scherenteil angeordnet ist und an einem
Vorsprung des Verriegelungsschiebers, vorzugsweise an dem
Verriegelungsstift, angreift. Dadurch wird der Verriegelungsstift doppelt ausgenutzt, was die Zahl der verwendeten Einzelteile verringert.

Weitere Merkmale, Einzelheiten und Vorzüge der Erfindung
ergeben sich aus den Ansprüchen, der folgenden Beschreibung
einer bevorzugten Ausführungsform der Erfindung sowie anhand
der Zeichnung. Hierbei zeigen:

    Fig. 1  eine Seitenansicht der Schere;

    Fig. 2  eine vergrößerte, teilweise geschnittene Ansicht
            der Schere in verriegeltem Zustand;

Fig. 3   eine der Fig. 2 entsprechende Darstellung bei
         geschlossener Schere und entriegeltem Verriegelungselement;

Fig. 4   eine Darstellung bei geöffneter Schere;

Fig. 5   eine Aufsicht auf das Verriegelungselement;

Fig. 6   eine der Fig. 2 entsprechende Darstellung mit
         geänderter Federlagerung;

Fig. 7   einen Längsschnitt durch eine zweite Ausführungsform einer Schere;

Fig. 8   eine perspektivische Teilansicht des Verriegelungsschiebers und der Schere;

Fig. 9   einen Längsschnitt durch den Verriegelungsschieber der Ausführungsform nach Fig. 7;

Fig. 10 eine perspektivische Teilansicht einer nochmals
         geänderten Ausführungsform.

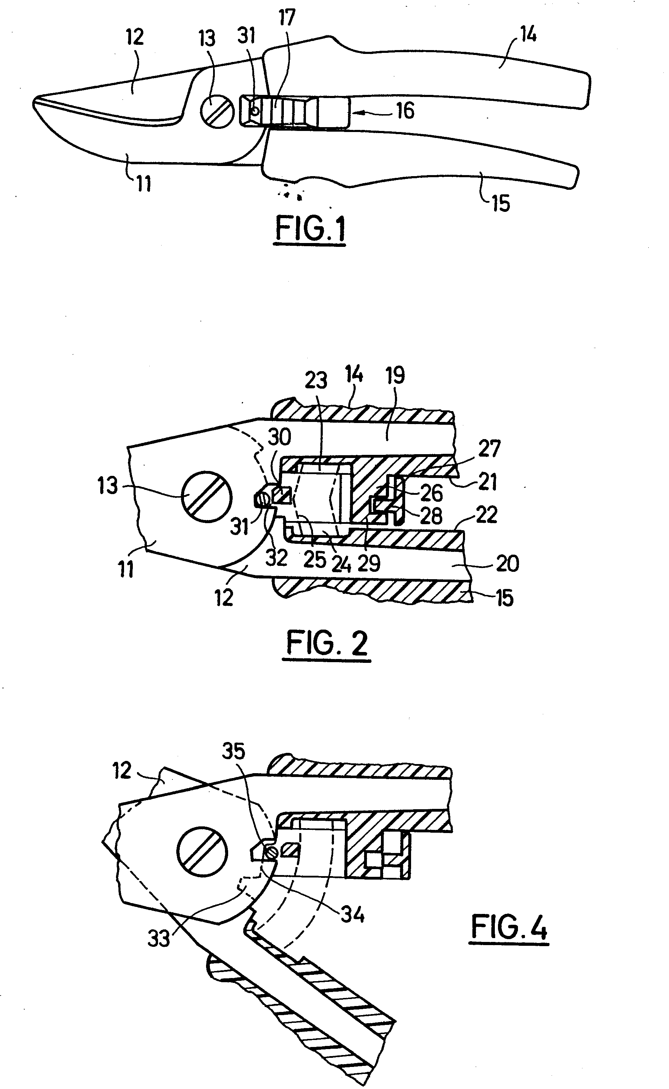

Die in Fig. 1 dargestellte Schere enthält zwei Scherenteile
11, 12, die mit Hilfe eines Gelenks 13 scherenartig miteinander verbunden sind. Beide Scherenteile 11, 12 weisen je
einen Handgriff 14, 15 auf, mit deren Hilfe sich die Schere
betätigen läßt. Am Handgriff 14 ist ein Verriegelungselement
16 angeordnet, das sich in Längsrichtung des Handgriffs 14
verschieben läßt. Das Verriegelungselement weist eine Griffmulde 17 auf, die mit Riefelungen versehen sein kann, um
das leichtere Bedienen zu ermöglichen. Das Verriegelungselement
16 weist darüber hinaus einen Sperrstift 31 auf, der parallel zu der Achse des Gelenks 13 verläuft. In Fig. 1 ist das
Verriegelungselement in der Verriegelungsstellung dargestellt.
Der Sperrstift 31 besteht aus Metall und ist in das Verriegelungselement 16 von der Seite her eingeschoben.

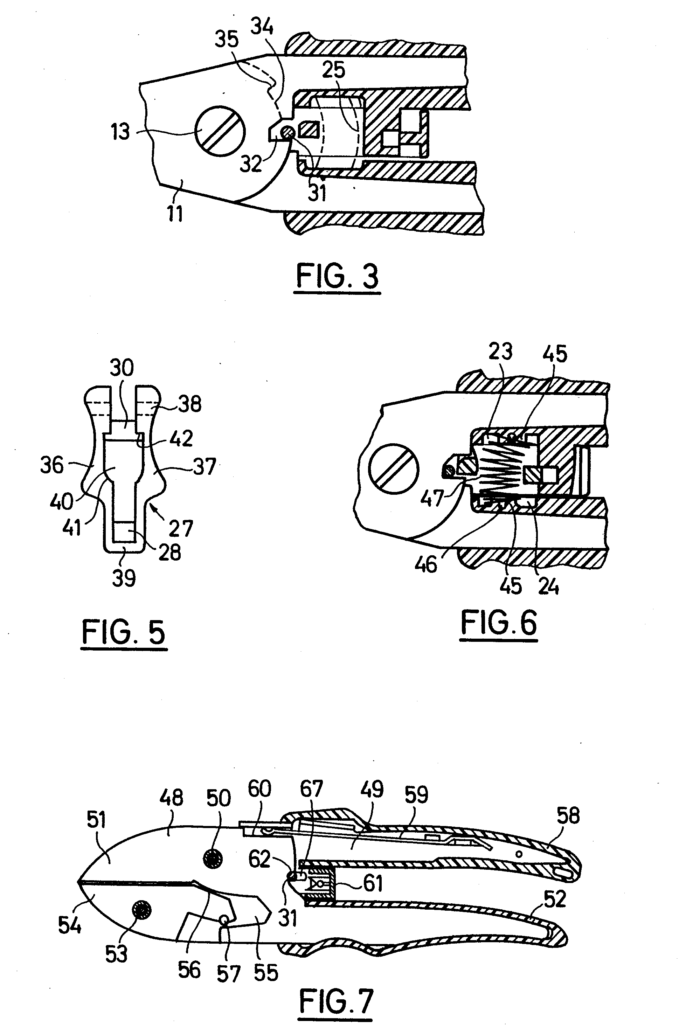

Fig. 2 zeigt nun eine teilweise geschnittene vergrößerte
Ansicht der Schere in Fig. 1. Es ist zu sehen, daß das Scherenteil 11 rechts vom Gelenk 13, das durch eine Schraube
dargestellt ist, in einen schmalen Steg 19 übergeht, der
vollständig in dem aus Kunststoff bestehenden Handgriff 14
eingebettet ist. Ebenso geht auch das Scherenteil 12 in einen
Steg 20 über, der im Handgriff 15 untergebracht ist. An der
dem Handgriff 15 zugewandten Seite 21 des Handgriffs 14 und
an der dem Handgriff 14 zugewandten Seite 22 des Handgriffs
15 ist im Bereich der schneidenseitigen Enden je eine Vertiefung 23, 24 angeordnet, die beide einen etwa kreisförmigen
Querschnitt aufweisen. In diesen Vertiefungen sind die Enden
einer nur schematisch angedeuteten auf Druck beanspruchten
Schraubenfeder 25 untergebracht. Die Seite 21 des Handgriffs
14 weist zusätzlich einen sich in Richtung auf den zweiten
Handgriff 15 erstreckenden zapfenartigen Ansatz 26 auf, an
dem das als Schieber 27 ausgebildete Verriegelungselement
16 gelagert ist. Die Form des Verriegelungsschiebers 27 geht
aus Fig. 5 im einzelnen hervor, die im folgenden noch beschrieben wird.

Der Verriegelungsschieber 27 weist im Bereich seines von
dem Gelenk 13 abgewandten Endes einen Ansatz 28 auf, mit
dem er in einem Schlitz 29 geführt ist. An dem entgegengesetzten, d.h. dem Gelenk 13 zugewandten Ende weist der Schieber 27 einen Quersteg 30 und einen ebenfalls quer verlaufenden Sperrstift 31 auf. Der Schieber 27 ist in Fig. 2 in seiner Verriegelungsstellung dargestellt, in der der Sperrstift 31 sowohl in einem Schlitz 32 bzw. einer Einkerbung in dem
Scherenteil 11 als auch in einem entsprechenden Schlitz 33
bzw. einer Einkerbung in dem Scherenteil 12 geführt ist.
Das Scherenteil 11 ist aufgrund der Lagerung des Schiebers
27 an dem zugehörigen Handgriff 14 gegenüber dem Schieber
27 nicht verschwenkbar, während das Scherenteil 12 gegenüber
dem Schieber 27 und damit auch gegenüber dem Sperrstift 31
verschwenkbar ist. In der in Fig. 2 dargestellten Verriegelungsstellung liegt also der Sperrstift 31 sowohl in dem
Schlitz 32 in dem einen Scherenteil 11 als auch in dem Schlitz
33 in dem anderen Scherenteil 12. Dadurch wird eine unmittelbare Verriegelung der beiden Scherenteile aneinander erreicht,
wobei die Kraftübertragung von dem einen Scherenteil direkt
über den Stift 31 auf das andere Scherenteil wirkt. Eine
Beanspruchung des Schiebers selbst tritt nicht auf.

Wie sich ebenfalls aus Fig. 2 ergibt, ist die Schraubenfeder
25 in dem Schieber 27 derart geführt, daß sie in der Verriegelungsstellung nach links, d.h. in Richtung auf das Gelenk
13 ausgeknickt ist. Dadurch wird eine Rastung des Schiebers
in der Verriegelungsstellung erreicht, da zum Geraderichten
der Feder 25 wiederum Kraft benötigt wird.

Fig. 3 stellt nun den Schieber 27 in seiner Freigabestellung
dar, bei der er vom Gelenk 13 weg in eine zweite Stellung
gerückt ist. Die zweite Stellung wird durch einen in der
Figur nicht sichtbaren Anschlag begrenzt. In dieser Stellung
ist die Schraubenfeder 25 nach rechts, d.h. vom Gelenk 13
weg, ausgeknickt. Dadurch wird auch diese Stellung des Schiebers 27 stabil verrastet. Der Sperrstift 31 liegt zwar noch
im Schlitz 32 des Scherenteils 11, nicht mehr jedoch im Schlitz
33 des Scherenteils 12. Aus diesem Grunde kann das Scherenteil 12 und der mit ihm verbundene Handgriff 15 im Uhrzeigersinn verschwenkt werden, wobei die in Fig. 2 und 3 gestrichelt dargestellte Kante 34 des Scherenteils 12 an dem Verriegelungsstift 31 vorbeigelangen kann. Dadurch gelangt die Schere in die Fig. 1 dargestellte Stellung, in der die Stufe 35 der Kante 34 zur seitlichen Anlage an dem Sperrstift 31 gelangt. Dadurch ist die Öffnungsbewegung der Schere begrenzt. Die Stufe 35 bildet also zusammen mit dem Sperrstift 31 einen Anschlag für die Öffnungsbewegung der Schere.

Fig. 5 zeigt eine Aufsicht auf den Verriegelungsschieber 27 der Schere nach der Erfindung. Dieser Schieber 27 besitzt etwa die Form eines langgestreckten U, das in Richtung auf das Gelenk 13 der Schere offen ist. Die beiden Schenkel 36, 37 des Verriegelungsschiebers 27 sind im Bereich des offenen Endes durch den in Fig. 2 bereits angesprochenen Quersteg 30 miteinander verbunden. Der Abstand zwischen den freien Enden der Schenkel 36 und 37 ist so gewählt, daß die beiden Scherenteile 11, 12 hierin Platz finden. Die Enden der Schenkel 36, 37 besitzen eine Querbohrung 38, in die der Sperrstift 31 eingesetzt und befestigt wird. Er ist aus Gründen der Übersichtlichkeit in Fig. 5 nicht dargestellt. An dem von dem Gelenk 13 abgewandten Ende sind die beiden Schenkel 36 und 37 durch einen Steg 39 verbunden, der an seiner Innenseite den Ansatz 28 aufweist, mit dessen Hilfe der Schieber in dem Schlitz 29 geführt ist. Die Führung des anderen Endes des Schiebers erfolgt durch den Sperrstift 31, der in dem Schlitz 32 des einen Scherenteils 11 geführt ist.

Zentral wird der Schieber 27 von einer etwa zylindrischen Öffnung 40 durchsetzt, die bei eingebautem Schieber von der Seite 21 des Handgriffs 14 zu der Seite 22 des Handgriffs 15 verläuft und etwa mit den Vertiefungen 23, 24 in Deckung steht. Der Innendurchmesser der Öffnung 40 entspricht etwa dem Außendurchmesser der in den Fig. 1 bis 4 gestrichelt
angedeuteten Schraubenfeder 25. Das Ausknicken der Schraubenfeder 25 aus ihrer neutralen Stellung wird in der einen Richtung durch den Quersteg 30 und in der anderen Richtung durch
die Abrundung 41 zu beiden Seiten der Öffnung 40 bewirkt. An
dem Übergang zwischen dem zu dem Gelenk 13 hin gerichteten
freien Ende des Schiebers 27 zu der Öffnung 40 sind zwei
Stufen 42 gebildet, an denen ein in den Figuren nicht dargestellter am Griff 14 befestigter Anschlag angreifen kann,
um dadurch die Bewegung des Schiebers 27 vom Gelenk 13 weg
zu begrenzen.

Das Verriegelungselement 16 nach der Erfindung macht zum
einen die Verwendung einer Schraubenfeder erstmals möglich,
wobei gleichzeitig die Schraubenfeder dazu verwendet wird,
eine Verrastung des Verriegelungselementes in den Extremstellungen zu bewirken. Gleichzeitig wird der Sperrstift 31 dazu
verwendet, eine direkte mechanische Verriegelung der beiden
Scherenteile 11, 12 zu ermöglichen, so daß das Verriegelungselement nach der Erfindung nur geringen Kräften ausgesetzt
wird.

Bei der Einzelansicht in Fig. 6 wird eine andere Schraubenfeder verwendet. In den Vertiefungen 23 und 24 sind kegelförmige Vorsprünge 45 angeordnet, die einen quer verlaufenden Schlitz 46 aufweisen. Die Enden der Schraubenfeder 47
sind abgebogen und verlaufen etwa längs eines Durchmessers,
wobei diese abgebogenen Enden in die Schlitze 46 der Vorsprünge 45 eingesetzt sind. Dadurch sind beide Enden der Schraubenfeder 47 etwa schneidenförmig gelagert, so daß die Schraubenfeder 47 leichter ausknickt.

Fig. 7 zeigt einen Längsschnitt durch eine zweite Ausführungsform einer Schere. Die Schere enthält ein erstes Scherenteil 48, das mit einem zweiten Scherenteil 49 mit Hilfe einer
Schraube 50 verschwenkbar verbunden ist. Das Scherenteil
48 enthält an seiner in Fig. 7 linken Seite eine Schneide
51. An seiner entgegengesetzten Seite ist das Scherenteil
48 mit einem aus Kunststoff bestehenden Griff 52 versehen.

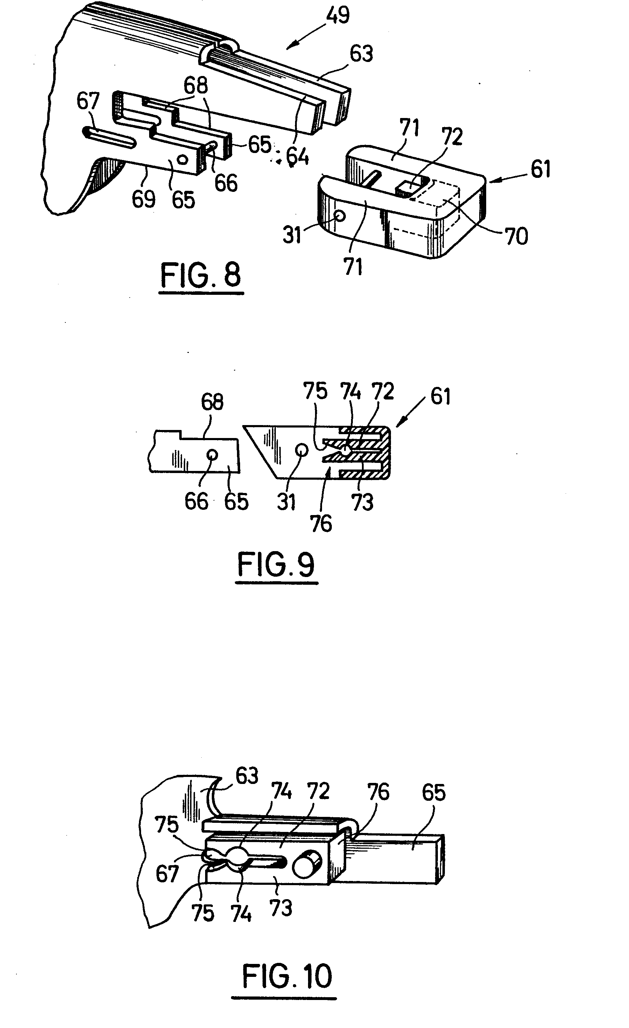

Das zweite Scherenteil 49 weist eine mit Hilfe einer Schraube 53 gelenkig gelagerte Schneide 54 auf, die mit Hilfe einer
in einer Ausnehmung 55 geführten Kante 56 und einer Walze
57 geführt ist. Auch das zweite Scherenteil 49 weist einen
aus Kunststoff bestehenden Griff 58 auf. Zum Öffnen der
Schere dient eine Blattfeder 59, die im Griff 58 untergebracht ist und an einer Kante 60 des Scherenteils 48 angreift.
Zwischen den beiden Griffen 58 und 52 ist ein Verriegelungsschieber 61 angeordnet, der einen Verriegelungsstift 31 aufweist. Dieser Verriegelungsstift 31 greift an einer Flanke
62 an dem Scherenteil 48 zu dessen Verriegelung an. Einzelheiten des Verriegelungsschiebers ergeben sich aus Fig. 8.

Hier ist zu sehen, daß das Scherenteil 49 aus zwei parallel
zueinander verlaufenden Platinen 63, 64 besteht. Die Platinen 63, 64 sind symmetrisch zu ihrer Längsmittelebene ausgebildet. Jede Platine weist unterhalb der Bereiche, die in
dem Griff 58 untergebracht sind, einen parallel zu den Griffen verlaufenden Ansatz 65 auf. Die Enden der Ansätze 65
sind durch einen Querstift 66 miteinander verbunden. Der
Stift 66 verläuft parallel zu den Schrauben 50 und 53 sowie
zu dem Verriegelungsstift 31. Beide Platinen besitzen im
Bereich des Beginns der Ansätze 65 je einen in Längsrichtung
verlaufenden Schlitz 67, der auch in Fig. 7 zu sehen ist.

0135737

Die Ansätze 65 weisen eine abgestufte Oberkante 68 auf, wobei die Oberkante stückweise parallel zu der Unterkante 69 verläuft.

Der Verriegelungsschieber 61 besitzt etwa U-Form, wobei der Steg 70 des Schiebers 61 ausgehöhlt ist. Die Abmessungen sind so gewählt, daß der Innenabstand der beiden Schenkel 71 etwa dem Außenabstand der beiden Ansätze 65 entspricht. Die Breite der vorderen Teile der Ansätze 65 ist so gewählt, daß diese Ansätze 65 in den ausgehöhlten Bereich des Schiebers 61 einfassen können, siehe auch Fig. 9. Der Schieber 61 weist zwei einander gegenüberliegende federnde Zungen 72, 73 auf, siehe Fig. 9. Beide Zungen 72, 73 sind einstückig mit dem Schieber 61 ausgebildet und etwa U-förmig angeordnet, wobei beide Zungen 72 an ihrem freien Ende je eine Schrägfläche 75 und daran anschließend eine etwa kreiszylinderförmige Ausnehmung 74 aufweisen. Wird der Schieber 61 in Fig. 9 nach links geschoben, so gelangt der Stift 66 zunächst zur Anlage an den Schrägflächen 75, die ebenfalls gekrümmt ausgebildet sein können. Durch Anlage des Stiftes 66 an den Schrägflächen 75 wird eine erste Verrastungsstellung des Schiebers 61 bewirkt. Bei Weiterschieben des Schiebers auf den Stift 66 zu federn die Zungen 72, 73 nach außen, so daß der Stift 66 in die Ausnehmungen 74 zu liegen kommt. Dadurch wird eine zweite Raststellung erreicht. Ein Weiterschieben des Schiebers 61 wird durch das Anliegen des Stiftes 31 am Ende des Schlitzes 67 verhindert, wobei die abgestufte Oberkante 68 des Ansatzes 65 so angeordnet ist, daß diese Bewegung möglich ist.

Der Zusammenbau des Schiebers, siehe Fig. 8, geschieht so, daß bei fehlendem Verriegelungsstift 31 der Schieber 61 von rechts auf die Ansätze 65 aufgeschoben wird, wobei die Ansätze 65 in den ausgehöhlten Bereich des Schiebers im Bereich des Steges 70 eingreifen. Bei aufgeschobenem Schieber 61 wird dann der Verriegelungsstift 31 von außen durch den ersten Schenkel 71 des Schiebers 61, dann durch die beiden Längsschlitze 67 der Platinen 63 und 64 und anschließend durch den zweiten Schenkel 71 des Schiebers 61 durchgeführt. Der Schieber 61 wird also mit Hilfe des in den Schlitzen 67 enthaltenen Verriegelungsstiftes 31 geführt.

Fig. 10 zeigt eine abgeänderte Ausführungsform. Bei dieser Ausführungsform ist das Zungenfederelement 76 an einem Ansatz 65 einer Platine 63 befestigt. Das Zungenfederelement weist wiederum zwei federnde Zungen 72, 73 auf, die an ihrem freien Ende je eine Schrägfläche 75 und daran anschließend eine etwa kreiszylinderförmige Ausnehmung 74 aufweisen. Das Zungenfederelement 76 ist seitlich neben dem Längsschlitz 67 angeordnet, so daß bei eingesetztem Schieber 61 der Verriegelungsstift 31 sowohl an den Schrägflächen 75 als auch in den Ausnehmungen 74 eingreifen kann. Dadurch dient der Verriegelungsstift 31 nicht nur zum Verriegeln der Schere, sondern auch zum Verrasten des Schiebers 61 zusammen mit dem Zungenfederelement 76. Dies erspart ein Bauteil, da der Querstift 66 bei der Ausführungsform nach Fig. 8 nicht mehr erforderlich ist.

Die aus der Beschreibung und Zeichnung sowie den Ansprüchen hervorgehenden einzelnen Merkmale können jeweils für sich allein oder zu mehreren z.B. in Form von Unterkombinationen vorteilhafte und für sich schutzfähige Ausführungen darstellen, für die hier Schutz beansprucht wird.

3. September 1984 Sf/kh

A 21 336EP

Anmelderin:     GARDENA Kress + Kastner GmbH
                Lichternseestraße 40
                7900 Ulm/Donau

Schere, insbesondere Gartenschere

- - - -

A N S P R Ü C H E

1.  Schere, insbesondere Gartenschere, mit zwei mit je einem
    Griff (14, 15; 52, 58) versehenen, miteinander mit Hilfe
    eines Gelenks (13, 50) verbundenen Scherenteilen (11,
    12, 48, 49), mit einem Verriegelungselement (16) zum
    Verriegeln der Schere in geschlossener Stellung sowie
    ggf. mit einer Feder (25, 59) zum Öffnen der Schere,
    dadurch gekennzeichnet, daß das Verriegelungselement
    (16) ein Schieber (27, 61) ist, der im Bereich des dem
    Gelenk (13, 50) zugeordneten Endes eines Griffes (14,
    58) angeordnet, etwa in Längsrichtung des Griffes (14,
    58) verschiebbar und unter Federwirkung in einer Verriegelungsstellung und einer Freigabestellung rastend festlegbar ist.

2.  Schere nach Anspruch 1, dadurch gekennzeichnet, daß der
    Verriegelungsschieber (27, 61) einen Sperrstift (31)
    aufweist, der in Verriegelungsstellung an einer Flanke (62) eines Schlitzes (33) bzw. einer Einkerbung des ihm gegenüber verschwenkbaren Scherenteils (12, 48) angreift, wobei vorzugsweise der Sperrstift (31) in einem Schlitz (32, 67) bzw. einer Einkerbung des anderen Scherenteils (11, 49) geführt ist.

3. Schere nach einem der vorhergehenden Ansprüche, dadurch gekennzeichnet, daß der Verriegelungsschieber (27, 61) an mindestens einem Schneidenteil (11, 12, 48, 49) im Bereich des Gelenks (13) angreift.

4. Schere nach einem der Ansprüche 2 bis 3, dadurch gekennzeichnet, daß mindestens ein Schlitz (32, 33, 67) bzw. eine Einkerbung im Bereich des Gelenks (13) angeordnet ist.

5. Schere nach einem der vorhergehenden Ansprüche, dadurch gekennzeichnet, daß die Feder zum Festlegen des Schiebers (27) als Schraubenfeder (25) ausgebildet ist, diesen durchsetzt und sowohl in der Verriegelungsstellung als auch in der Freigabestellung des Schiebers (27) aus ihrer Normalstellung ausgeknickt ist, wobei vorzugsweise der Verriegelungsschieber (27) eine von dem einen Scherenteil (11) zu dem anderen Scherenteil (12) verlaufende Öffnung (40) zur Aufnahme der Feder (25) aufweist und die Schraubenfeder (25) zum Öffnen der Schere dient.

0135737

6. Schere nach einem der Ansprüche 1 bis 4, dadurch gekennzeichnet, daß die Feder zum Rasten des Verriegelungsschiebers (61) durch ein Zungenfederelement (76) gebildet
   ist, das zwei Raststellungen aufweist.

7. Schere nach Anspruch 6, dadurch gekennzeichnet, daß das
   Zungenfederelement (76) zwei gegenüberliegende Federzungen (72, 73) aufweist, von denen jede eine Vertiefung
   (74) zur Bildung der einen Raststellung und eine Schrägfläche (75) zur Bildung der zweiten Raststellung aufweist,
   wobei die Federzungen (72, 73) U-förmig angeordnet und
   einstückig, vorzugsweise einstückig mit dem Verriegelungsschieber (61), ausgebildet sind.

8. Schere nach einem der Ansprüche 6 bis 7, dadurch gekennzeichnet, daß das Zungenfederelement (76) an dem Verriegelungsschieber (61) angeordnet ist und an einem Vorsprung
   eines Scherenteils (48, 49) angreift.

9. Schere nach einem der Ansprüche 6 bis 7, dadurch gekennzeichnet, daß das Zungenfederelement (76) an einem Schneidenteil (49) angeordnet ist und an einem Vorsprung des
   Schiebers (61), vorzugsweise an dem Verriegelungsstift
   (31) angreift.

10. Schere nach einem der vorhergehenden Ansprüche, dadurch
    gekennzeichnet, daß der Sperrstift (31) einen Anschlag
    zur Begrenzung der Öffnungsbewegung der Schere bildet.

- - - -

FIG.1

FIG. 2

FIG.4

A 21 179/80

0135737

2/3

0135737

FIG. 3

FIG. 5

FIG. 6

FIG. 7

A 21 179/80

0135737

FIG. 8

FIG.9

FIG.10